# EUROPEAN PATENT SPECIFICATION

(11) **EP 2 843 124 B1**
(45) Date of publication and mention of the grant of the patent: **21.08.2019**
(21) Application number: 13181948.4
(22) Date of filing: 28.08.2013
(51) Int. Cl.: D06F 58/28, D06F 58/20

(54) **Apparatus and method of operating a cooling fan in a heat-pump laundry treatment apparatus**
Vorrichtung und Verfahren zum Betrieb eines Kühlgebläses in einer Wäschebehandlungsvorrichtung mit Wärmepumpe
Appareil et procédé de fonctionnement d'un ventilateur de refroidissement dans un appareil de traitement de linge à pompe à chaleur

(43) Date of publication of application: 04.03.2015
(73) Proprietor: Electrolux Appliances Aktiebolag, 105 45 Stockholm (SE)
(72) Inventor: Contarini, Andrea, 33080 Porcia (PN) (IT); Colombera, Giovanni, 33080 Porcia (PN) (IT)
(74) Representative: Electrolux Group Patents

(56) References cited:
- EP-A1- 1 811 077
- EP-A1- 2 527 520
- EP-A1- 2 733 257
- JP-A- 2006 061 353
- JP-A- 2008 113 944

## Description

The invention relates to a method of operating a cooling fan for cooling at least one heat-pump system component in a heat-pump laundry treatment apparatus, in particular heat-pump system dryer or heat-pump system washer-dryer. Further the invention relates to a laundry treatment apparatus having a control unit configured to operate a cooling fan.

EP 1 541 745 B1 discloses a heat pump laundry dryer comprising a heat pump system including a compressor which is adapted to circulate a refrigerant through the heat-pump system. Furthermore, the laundry dryer comprises a drum having therein laundry, and a process air path for guiding process air or drying air to the rotary drum. The dryer also comprises a blower for blowing the drying air to the process air path. A controller is used for controlling operation of the dryer, in particular for operating the blower and the compressor.

EP 2 527 520 A1 suggests an article treatment apparatus, like a heat-pump dryer, in which the heat pump system is provided with a safety element. In the heat pump system an overpressure detector is provided at a high pressure side of the refrigerant loop. In response to detecting an overpressure state (abnormal state), the operation mode of the apparatus is modified for reducing the refrigerant overpressure. For example the compressor is stopped for a predetermined period. In case of releasing refrigerant, the operation mode of an air blower is modified. Also in response to the abnormal state, the cooling air blower can be activated. In normal operation, the cooling air blower is activated for cooling the compressor and for maintaining optimal operation of the heat pump system.

The laundry dryer of JP 2006-061353 has a heat pump system with a compressor for conveying the refrigerant. The control means stops the compressor for a predetermined time, if the drying operation is suspended.

EP 2 733 257 A1 represents prior art under Art. 54(3) EPC and discloses a laundry treatment apparatus comprising a heat pump system with a condenser, an evaporator, an expansion device, a compressor and a cooling air blower for cooling the compressor. Compressor operation is suspended to avoid overpressures on the heat pump system, which is detected indirectly through the temperature of condenser exit. Every time this temperature exceeds a configured threshold the compressor is switched off for 5 minutes to allow internal pressures to decrease at a reasonable level. To remove heat from the heat pump system a process air blower and drum rotation are further applied and optionally the cooling air blower is activated or is operated continuously (further operated) while compressor is switched off.

It is an object of the invention to provide a method of operating a heat-pump laundry treatment apparatus in such a manner that its heat-pump system operation is economic or improved, and a laundry treatment apparatus implementing the improved operation.

The invention is defined in independent claims 1 and 11, respectively. Particular embodiments are set out in the dependent claims.

According to the invention, a heat pump laundry treatment apparatus comprises a cooling fan for cooling at least one heat-pump system component. The heat-pump system has a compressor which is adapted to circulate a refrigerant through the heat-pump system during a laundry drying operation. The cooling fan is adapted to convey cooling air over the at least one heat-pump system component. The cooling air may be conveyed through or over the component wherein the cooling fan may be arranged upstream or downstream of the HP system component.

A control unit is controlling the operation of the heat pump laundry treatment apparatus. The heat pump laundry treatment apparatus - in the following description also denoted in brief "apparatus" - is in particular configured as a heat pump laundry dryer or a heat pump washing machine having a drying function (washer dryer).

In case that the compressor operation is suspended, the method of operating the cooling fan comprises at least the following modes:
- if the cooling fan is active at the time of suspending the compressor operation, the cooling fan operating is maintained at the same conveyance rate or its conveyance rate is increased, and
- if the cooling fan is not active at the time of suspending the compressor operation, the cooling fan for conveying cooling air to the at least one heat-pump system component is activated.

Thereby, after suspension of the compressor operation, the cooling fan is active or will be activated. This cooling routine allows cooling at least a portion/component of the heat-pump system after suspending compressor operation. Such component may be any part of the heat-pump system, in particular the compressor or an auxiliary condenser.

Consequently, this cooling routine increases the probability in successfully restarting the heat-pump system, in particular for restarting the compressor. In particular the chance for restarting the compressor is improved, even after a very short time period after ending a previous drying operation (the compressor is stopped at the end of the previous drying operation) and/or after a short time period when the compressor operation has been suspended in a running (but presently suspended) drying process.

Suspension of the compressor operation may depend on predetermined conditions.

Preferably, the compressor operation will be suspended, if the drying cycle/drying operation is suspended and/or if a safety threshold temperature of the heat-pump system is exceeded (e.g. compressor temperature or refrigerant temperature, particularly refrigerant temperature at the compressor outlet).

Preferably a unit for controlling the operation of the cooling fan is adapted such that the conveyance capacity (which can also be denoted as cooling capacity) of the cooling fan varied or adjusted depending on operation conditions of the apparatus.

The compressor suspension is cancelled in order to resume (restart) the compressor operation. This resumption is combined with maintaining the cooling fan operation (i.e. active cooling fan) or maintaining the cooling fan operation at
the increased conveyance rate for a predetermined delay operation period after resuming the compressor operation. Thereby cooling of the at least one component of the heat-pump system is maintained for a predetermined delay period after resuming compressor operation. Consequently efficient heat-pump performance can be achieved very fast after resuming compressor operation. Particularly compressor operation is resumed when or at the time when a suspended drying operation is resumed.

When the predetermined delay operation period is expired then preferably the cooling fan operation is changing (i.e. resuming) to a standard operation as it is used during normal drying operation. The standard operation of the fan provides that the fan is off or is on and blowing with a predetermined conveyance rate in dependency of the operation conditions (e.g. temperature of the refrigerant and/or compressor) during the standard drying operation.

Usually the apparatus (particularly dryer or washer dryer) comprises a laundry storing compartment and a door covering an opening for loading/unloading the laundry storing compartment wherein the door is closed during a drying operation. If the door is opened the control operation is preferably as follows: The drying operation and the compressor operation are suspended, whereas the cooling fan is kept active at the same conveyance rate or its conveyance rate will be increased. However, if the cooling fan is not active at the time of suspending the drying operation and the compressor operation, the cooling fan will be activated.

This control operation can be easily provided when the motor driving the laundry storing compartment and the motor driving the cooling fan are independently controllable components of the apparatus. Particularly, the laundry storing compartment is configured as a rotatable drum driven by a drum motor and the cooling fan is driven by a fan motor that can be controlled independent of the operation of the drum motor, i.e. the fan motor is capable to be operated independently of the drum motor. Thus, the cooling routine can be implemented independently from user actions during operation of the apparatus.

In a further embodiment of suspending the compressor operation, the cooling fan operation (particularly having the increased conveyance rate) remains for a predetermined period after the suspension of the compressor operation. In one embodiment, continuation of fan operation for the predetermined (time) period is independent of any other or of additional conditions. E.g. operating the fan for the time period is started immediately after detecting the suspension of the compressor operation. In other embodiments, this time period is running dependent on predefined additional conditions. For example, the predetermined period is running if predefined temperature conditions of the refrigerant and/or the compressor are fulfilled.

Particularly, the cooling fan operation after suspending the compressor operation is controlled by temperature detection and comparison with a temperature threshold value. For example, the cooling fan operation
- is maintained as long as a temperature of the heat-pump system is above a predetermined temperature threshold value, or
- is maintained for a predetermined operation period after the event that a temperature of the heat-pump system is equal to or is below a predetermined temperature threshold value.

Preferably the detected temperature of the heat-pump system is a refrigerant temperature or a compressor temperature. Considering the predetermined operation period it is possible to maintain the cooling fan operation even if the heat-pump system temperature (e.g. refrigerant temperature) is below the temperature threshold value. This cooling extension supports implementing the cooling routine.

Regarding the predetermined temperature threshold value, preferably the predetermined threshold value can be different - depending on the operation mode of the heat-pump system. Particularly, two different threshold values can be defined as follows:
- a first temperature threshold value that is used during the operation of the heat-pump system or compressor for operating the cooling fan, and
- a second temperature threshold value that is lower than the first temperature threshold value (and used preferably during suspension of the heat-pump system/compressor).

Controlling the fan operation using the two different temperature threshold values provides a further possibility to extend cooling operation during suspension of the compressor. The second temperature threshold value used during suspension of the compressor is lower than the first temperature threshold value used during compressor operation (not suspended) and consequently the cooling fan is switched inactive (status "OFF") during compressor suspension not until the temperature of the heat-pump system is lower than the second temperature threshold value.

If the temperature threshold value corresponds to the lowered second temperature threshold value during heat-pump system/compressor suspension, it is preferred to change this value again to the higher first temperature threshold value when the heat-pump system/compressor is resumed again. This change can be made as soon as the resumption is detected or alternatively when a predetermined time interval has expired after the resumption.

In a further embodiment the compressor operation is maintained for a predetermined operation period when the drying operation is suspended. Thereby a potential suspension of compressor operation is delayed for a predetermined operation period after suspension of the drying operation. Likewise, a cooling fan operation is preferably maintained within the predetermined operation period (preferably with an increased fan speed). Extension by this predetermined operation period is beneficial for the heat-pump system efficiency because it is more efficient to avoid any change in the heat-pump system's operation mode (operating or suspending) when the drying operation is suspended only for a short time. This "short time suspension" is made e.g. in case the user opens the door of the laundry storing compartment only short-time to add a laundry piece into the laundry storing compartment and a door safety switch suspends the drying operation. Other possibilities to suspend the drying operation could be made by pressing an extra button and/or repressing a drying start button which results in a suspension (pause) of drying operation.

In general, suspending drying operation means at least stopping rotation of the drum-like laundry storing compartment and/or stopping a process air blower.

In a further embodiment the operation status of the cooling fan
- is maintained during operation of the compressor in the predetermined operation period after suspension of the drying operation, and/or
- is maintained, if the drying operation is resumed within the predetermined operation period.
It is noted that the operation status of the cooling fan may be "OFF" (i.e. not active/deactivated) or "ON" (i.e. active/activated).

Preferably, the described cooling routine is applied to cool at least the refrigerant compressor of the heat-pump system in order to increase the probability of an immediate restart of the compressor upon a respective request, even when there was only a short time period since compressor suspension. This target can be supported e.g. by controlling and/or reducing temperatures of the compressor shell or casing during the drying cycle's and/or compressor's suspension mode. Furthermore, cooling the compressor during the suspension mode contributes to a faster re-balancing of pressure differences within the heat-pump system, thus allowing a faster successful restart of the compressor after its suspension.

Additionally and/or alternatively, the at least one component of the heat-pump system to be cooled according to the cooling routine is an auxiliary heat exchanger or condenser adapted to cool the refrigerant at a location external to the process air channel. Thus, the cooling fan is able to support appropriate refrigerant temperatures for an efficient drying air performance.

According to another aspect of the invention a laundry treatment apparatus is provided which comprises: a heat pump system having a compressor for circulating the heat pump refrigerant, a cooling fan for cooling at least one component of the heat pump system, and a control unit. The control unit is adapted to control the operation of the cooling fan such that, in case that the compressor operation is suspended,
- if the cooling fan is active at the time of suspending the compressor operation, maintaining the cooling fan operating at the same conveyance rate or increasing the conveyance rate of the cooling fan, and
- if the cooling fan is not active at the time of suspending the compressor operation, activating the cooling fan for conveying cooling air to the at least one heat-pump system component, and the control unit is further adapted to control the operation of the compressor and the cooling fan such that the compressor operation is resumed when the compressor suspension is cancelled and the cooling fan operation is maintained or maintained at the increased conveyance rate for a predetermined delay operation period after resuming compressor operation.

Preferably the control unit of the laundry treatment apparatus is adapted to implement any of the method steps described above or in the following description individually or in any arbitrary combination. Additionally or alternatively the laundry treatment apparatus is further configured according the above or following elements and features individually or in any combination thereof.

A laundry treatment apparatus configured in this way and/or with a control unit implementing such method steps provides the advantages as described above and/or below. In particular the apparatus provides a more efficient or improved operation of the heat pump system.

Reference is made in detail to preferred embodiments of the invention, examples of which are illustrated in the accompanying figures which show:
- Fig. 1: a schematic view of a laundry treatment apparatus,
- Fig. 2: a schematic view of essential parts of the laundry treatment apparatus,
- Fig. 3: a flow diagram showing an implementation embodiment of the method,
- Fig. 4: a flow diagram showing a second implementation embodiment of the method, and
- Fig. 5: a flow diagram showing a third implementation embodiment of the method.

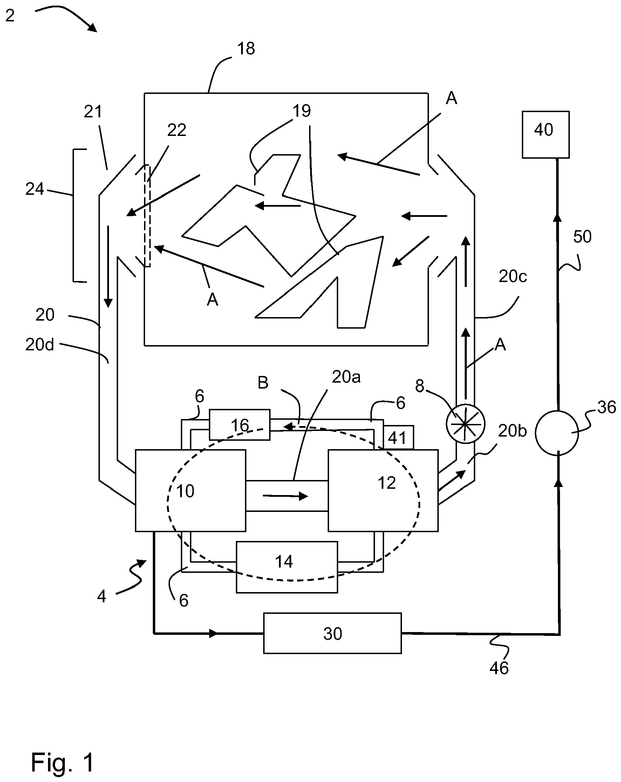

Fig. 1 shows a schematically depicted laundry treatment apparatus 2 which in this embodiment is a heat pump tumble dryer. The tumble dryer 2 comprises a heat pump system 4, including a closed refrigerant loop 6 which comprises in the following order of refrigerant flow B: a first heat exchanger 10 acting as evaporator for evaporating the refrigerant and cooling process air, a compressor 14, a second heat exchanger 12 acting as condenser for cooling the refrigerant and heating the process air, and an expansion device 16 from where the refrigerant is returned to the first heat exchanger 10. Together with the refrigerant pipes connecting the components of the heat pump system 4 in series, the heat pump system 4 forms the refrigerant loop 6 through which the refrigerant is circulated by the compressor 14 as indicated by arrow B.

The process air flow within the treatment apparatus 2 is guided through a compartment 18 of the home appliance 2 for receiving articles to be treated, e.g. a drum 18. The articles to be treated are textiles, laundry 19, clothes, shoes or the like. The process air flow is indicated by arrows A in Fig. 1 and is driven by a process air blower 8. The process air channel 20 guides the process air flow A outside the drum 18 and includes different sections, including the section forming the battery channel 20a in which the first and second heat exchangers 10, 12 are arranged. The process air exiting the second heat exchanger 12 flows into a rear channel 20b in which the process air blower 8 is arranged. The air conveyed by blower 8 is guided upward in a rising channel 20c to the backside of the drum 18. The air exiting the drum 18 through the drum outlet (which is the loading opening 21 of the drum and which is covered by a door 24) is filtered by a fluff filter 22 arranged close to the drum outlet in or at the channel 20. The optional fluff filter 22 is arranged in a front channel 20d forming another section of channel 20 which is arranged behind and adjacent the front cover of the treatment apparatus 2.

The condensate formed at the first heat exchanger 10 is collected and guided to a condensate collector 30 which is connected to an extractable condensate drawer 40 via a drain pipe 46, a drain pump 36 and a drawer pipe 50. The collected condensate can be pumped from the collector 30 to the drawer 40 which is arranged at an upper portion of the apparatus 2 from where it can be comfortably withdrawn and emptied by a user.

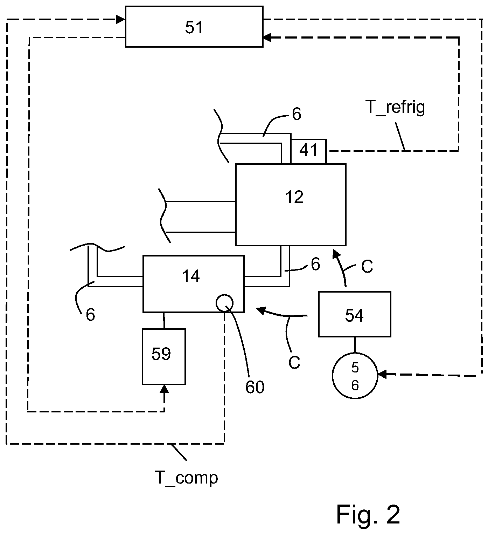

As shown in Fig. 2, a control unit 51 is disposed in the cabinet of the apparatus 2 to control several components in order to achieve efficient cooling of the compressor 14. The control unit 51 controls a cooling fan 54. This cooling fan 54 is driven by a fan motor 56. The cooling fan 54 blows cooling air C towards the compressor 14 for cooling. Alternatively or additionally, the cooling fan 54 sucks cooling air over the compressor and/or is capable to cool other components of the heat-pump system 4, e.g. an auxiliary heat exchanger arranged outside of the process air channel 20 and/or electronic components of the apparatus 2. In Fig. 2, the activated cooling fan 54 generates the cooling air flow C for cooling the compressor 14 preferably according to cooling routines described below. Furthermore, the control unit 51 is adapted to control a compressor motor 59 which is driving the compressor 14.

Preferably the control unit 51 is at the same time the control unit for controlling and monitoring the overall operation of the apparatus 2. For example and as shown in Fig. 2, the control unit 51 receives a temperature signal from a temperature sensor 41 which is for example arranged at the outlet of the second heat exchanger 12 (condenser) and which is indicative of the refrigerant temperature T_refrig at that position.

The cooling fan 54 is operated or activated by the control unit 51 in response to predefined signals according to overall operation of the apparatus 2 and according to the cooling routine to be described in detail. When the cooling fan 54 is activated, which means that cooling air C is blown towards or sucked from the compressor 14, the status of the cooling fan 54 is set to "ON". When the cooling fan 54 is not active or deactivated, the status of the cooling fan 54 is "OFF".

A compressor temperature sensor 60 is arranged at the compressor 14 to detect the temperature T_comp of the compressor 14. The control unit 51 compares the signals of this compressor temperature sensor 60 with a defined temperature threshold value to control the cooling operation of the heat-pump system 4. The compressor temperature sensor 60 can be arranged in a suitable position at or in or on a casing of the compressor 14.

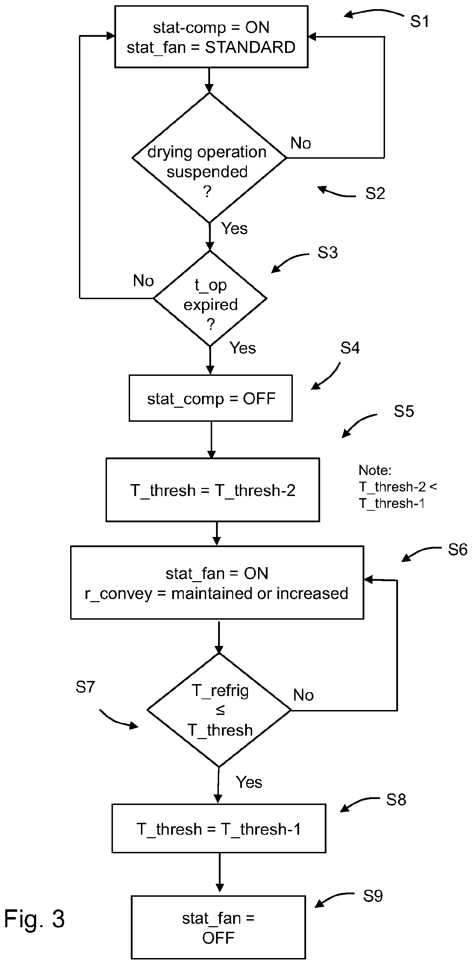

The control by the control unit 51 for cooling the compressor 14 according to the cooling routine will be explained by the flow diagrams according to Figs. 3 to 5. The section of the operation of the dryer 2 shown in Fig. 3 is starting (step S1) under a standard operation mode. In this regard, the status of the compressor 14 is "ON", i.e. the compressor 14 is in operation. The cooling fan 54 is in the standard operation mode "STANDARD", i.e. the cooling fan 54 is either in the state "ON" with a predetermined conveyance rate or in the state "OFF" according to the standard operation mode.

In step S2 it is verified, if a drying operation is suspended. If this is the case, the compressor 14 remains in operation until expiry of a predetermined operation period t_op (step S3). This extension of the compressor operation as compared to the drying operation by step S3 provides the chance that a re-start of the drying operation is initiated and suspension of the drying operation is cancelled without stopping the compressor at all. In this 'best' case the operation of the heat pump system is not or minimally affected (normally the process air blower is stopped which results in increase of condenser temperature (here at 12) and decrease of evaporator temperature (here at 10)). No compressor 14 restart or waiting period processing with a temporal delay of the overall drying process is necessary here. It is to be noted that step S3 is optional and with suspension of the drying process the compressor operation may be suspended directly (S2 to S4).

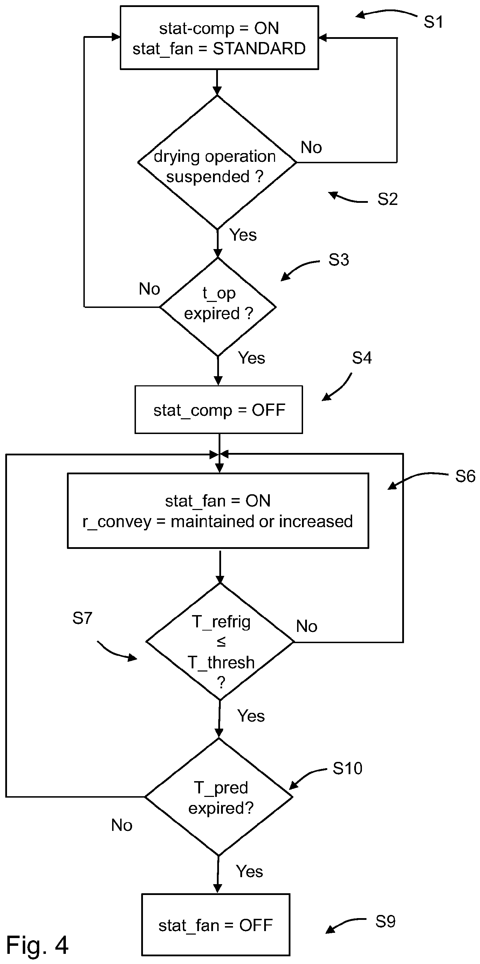

In the embodiment of Fig. 3 and at step S3, after expiry of this time period t_op (YES) the compressor operation is suspended, i.e. the compressor 14 is in the state "OFF" (step S4). In the embodiment of Fig. 3 (as compared to Fig. 4), during the suspension of the compressor the temperature threshold for activating/deactivating the cooling fan 54 is set to T_thresh = T_thresh_2 by step S5, while during the STANDARD operation - which is applied in the non-suspended drying operation - the threshold T_thresh = T_thresh_1 with T_thresh_1 > T_thresh_2. This effects cooling of the compressor during compressor suspension to a temperature which is lower than the temperature during the periods where the compressor is operating (active). By cooling to a lower temperature, the likelihood of successful compressor start is increased and/or shortening the pause time before the compressor restart is achieved which both also result in shorter interruption times in case of compressor suspension during a running (but temporally suspended) drying process.

In step S6 the cooling fan 54 is set to active (state "ON"), which either means that the cooling fan operation is maintained at the same conveyance rate (r_convey = maintained) or the conveyance rate is increased (r_convey = increased). Or, if prior to step S6 the state of the cooling fan 54 was previously not active (state "OFF") the cooling fan 54 is activated (state "ON") for conveying cooling air by step S6.

Step S7 verifies, whether the detected temperature T_refrig is less than or equal to the threshold temperature T_thresh set in S5. In case of 'No', the cooling of the compressor by the fan is continued with the conditions set in S6. In case of 'Yes', in step S8 the temperature threshold is set back to the higher value T_thresh = T_thresh_1. Basically by the loop of steps S7, S6, the cooling fan operation is maintained as long as the detected refrigerant temperature T_refrig is above the defined temperature threshold value T_thresh. In order to implement an extension of the cooling fan operation, the temperature threshold value T_thresh corresponds to a second temperature threshold value T_thresh-2 used during suspension of the compressor 14 (step S5). This second temperature threshold value T_thresh-2 is lower than a first temperature threshold value T_thresh-1 used during operation of the compressor 14 and the heat-pump system 4 for operating the cooling fan 54 when the refrigerant temperature T_refrig is above the first temperature threshold value T_thresh-1.

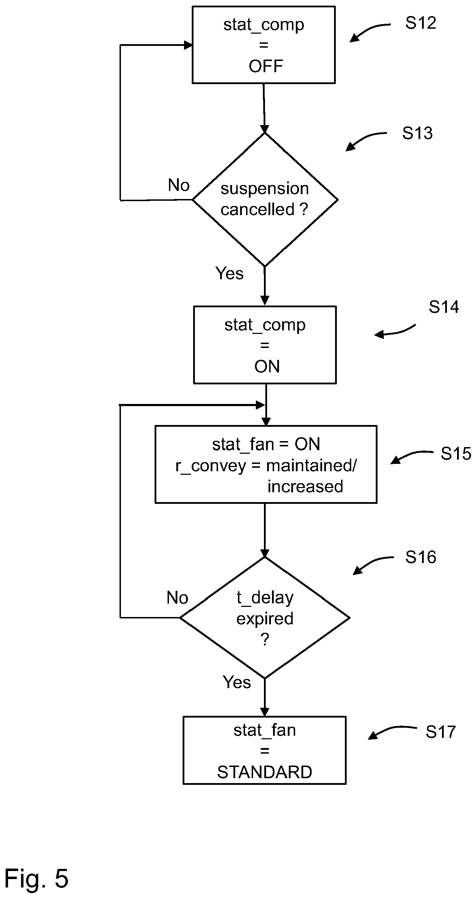

If the detected refrigerant temperature T_refrig is equal to or lower than the defined temperature threshold value T_thresh (step S7) the temperature threshold T_thresh is changed (S8) and the operation of the cooling fan 54 is suspended, i.e. is changed to the state "OFF" (step S9). After step S9 the drying process suspension processing routine continues with other steps - compare e.g. Fig. 5. For example with the drying process suspended, the compressor operation suspended and the fan operation stopped (OFF) the control unit 51 waits for a drying operation restart command (cancellation of suspension) and performs a compressor and drying process restart routine in dependency of the then existing conditions. Fig. 5 gives an embodiment for restarting the compressor as soon as (e.g. drying operation suspension is cancelled and thus) compressor suspension is cancelled.

An alternative routine to temporally extend or expand the cooling operation during the suspended compressor operation is provided by step S10 in Fig. 4 (instead of steps S5 and S8 in Fig. 3). In step S7, the detected refrigerant temperature T_refrig is compared with the standard temperature threshold value T_thresh (corresponding to T_thresh_1 in the routine Fig 3). If the detected refrigerant temperature T_refrig is higher than the temperature threshold value T_thresh the cooling fan operation is maintained (according to step S6). Even if the detected refrigerant temperature T_refrig is lower than or equal to the temperature threshold value T_thresh in step S7 the cooling fan operation is maintained for a predetermined operation period or predetermined time period t_pred by the delay implemented by step S10. After expiry of the predetermined operation period or predetermined time period t_pred (and after the detected refrigerant temperature dropped below the threshold T_thresh), the operation of the cooling fan 54 is suspended, i.e. its operation mode is changed to the state "OFF" (step S9) as already described along the routine in Fig. 3.

Alternatively, the control routine according to the steps S7 and S8 or according to the steps S9 and S10 is implemented by substituting the refrigerant temperature T_refrig by the compressor temperature T_comp.

The flow diagram in Fig. 5 provides another section of the control routine. In case the status of the compressor 14 is "OFF" (i.e. the compressor operation is suspended) according to step S12, it is verified, if this suspension is cancelled (step S13). If not cancelled, the compressor 14 remains suspended (step 12). If the suspension is cancelled (e.g. due to resuming drying operation), the operation of the compressor 14 is resumed and consequently the state of the compressor 14 is "ON" (step S14). In this case and according to step 15, the operation of the cooling fan 54 is maintained (stat_fan = ON, r_convey = maintained) or the cooling fan is operated at the increased conveyance rate (stat_fan = ON, r_convey = increased) until a predetermined delay operation period t_delay is expired (step S16). After expiry of the predetermined delay operation period t_delay the state of the cooling fan 54 is changed to "STANDARD". In the standard mode the "OFF"-state or "ON"-state (with a defined conveyance rate) is controlled according to the conditions of the standard control routine.

The routine of Fig. 5 is implemented in combination with the routines of Figs. 3 and 4 and vice versa. E.g. and as mentioned above, this routine is implemented as (drying operation +) compressor operation restart routine after step S9 (Figs. 3 and 4).

**Reference Numeral List**

| | | | |
|---|---|---|---|
| 2 | tumble dryer | 51 | control unit |
| 4 | heat pump system | 54 | cooling fan |
| 6 | refrigerant loop | 56 | fan motor |
| 8 | blower | 59 | compressor motor |
| 10 | first heat exchanger | 60 | compressor temperature sensor |
| 12 | second heat exchanger | | |
| 14 | compressor | A | process air flow |
| 16 | expansion device | B | refrigerant flow |
| 18 | drum | C | cooling air flow |
| 19 | laundry | r_convey | conveyance rate |
| 20 | process air channel | stat_fan | status of cooling fan |
| 20a | battery channel | stat_comp | status of compressor |
| 20b | rear channel | S1 - S17 | control steps |
| 20c | rising channel | t_delay | predetermined delay operation period |
| 20d | front channel | | |
| 21 | loading opening | t_op | predetermined operation period |
| 22 | filter element | | |
| 24 | door | t_pred | predetermined time period |
| 30 | condensate collector | T_comp | compressor temperature |
| 36 | drain pump | T_refrig | refrigerant temperature |
| 40 | condensate container | T_thresh | temperature threshold value |
| 41 | refrigerant temperature sensor | T_thresh-1 | first temperature threshold value |
| 46 | drain pipe | T_thresh-2 | second temperature threshold value |
| 50 | drawer pipe | | |

## Claims

1. Method for operating a cooling fan (54) for cooling at least one heat-pump system component (14) of a heat-pump system (4) in a heat-pump laundry treatment apparatus (2), in particular a heat-pump system dryer or a heat-pump system washer dryer, wherein a compressor (14) is adapted to circulate a refrigerant through the heat-pump system (4) during a laundry drying operation and wherein a cooling fan (54) is adapted to convey cooling air (C) over the at least one heat-pump system component (14), the method comprising in case that the compressor operation is suspended:
if the cooling fan (54) is active at the time of suspending the compressor operation, maintaining the cooling fan (54) operating at the same conveyance rate (r_convey) or increasing the conveyance rate (r_convey) of the cooling fan (54), and
if the cooling fan (54) is not active at the time of suspending the compressor operation, activating the cooling fan (54) for conveying cooling air (C) to the at least one heat-pump system component (14); and the method further comprising: resuming the compressor operation when the compressor (14) suspension is cancelled and maintaining the cooling fan operation or maintaining the cooling fan operation at the increased conveyance rate (r-convey) for a predetermined delay operation period (t_delay) after resuming compressor operation.

2. Method according to claim 1, further comprising: after the predetermined delay operation period (t_delay), resuming a standard cooling fan operation as is used during normal drying operation, wherein the standard operation of the fan provides that the fan is off or is on and blowing with a predetermined conveyance rate in dependency of the operation conditions.

3. Method according to any of the preceding claims,
wherein the laundry treatment apparatus (2) is a dryer or washer-dryer comprising a laundry storing compartment (18) and a door (24) covering an opening (21) for loading/unloading the laundry storing compartment (18), wherein the door (24) is closed during a drying operation, and
wherein the method further comprises: in response to opening of the door (24), suspending the drying operation and the compressor operation whereas maintaining the cooling fan (54) operating at the same conveyance rate (r_convey) or increasing the conveyance rate (r_convey) of the cooling fan (54).

4. Method according to claim 3, wherein the laundry storing compartment is a rotatable drum (18) driven by a drum motor and wherein the cooling fan (54) is driven by a fan motor (56) that can be controlled independent of the operation of the drum motor.

5. Method according to any of the preceding claims, further comprising: maintaining the cooling fan operation or the increased conveyance rate cooling fan operation for a predetermined period (t_pred) after suspending the compressor operation.

6. Method according to any of the preceding claims, further comprising: after suspending the compressor operation,
maintaining the cooling fan operation as long as a temperature (T_refrig) of the heat pump system (4) is above a temperature threshold value (T_thresh), or
maintaining the cooling fan operation for a predetermined operation period (t_pred) after the event that a temperature (T_refrig) of the heat pump system (4) is equal to or is below a temperature threshold value (T_thresh).

7. Method according to claim 6, wherein the temperature threshold value (T_thresh) is
a first temperature threshold value (T_thresh-1) that is used during operation of the heat pump system (4) for operating the cooling fan (54), or
a second temperature threshold value (T_thresh-2) that is lower than the first temperature threshold value (T_thresh-1).

8. Method according to any of the preceding claims, further comprising: when the drying operation is suspended, maintaining operating of the compressor (14) for a predetermined operation period (t_op).

9. Method according to claim 8,
wherein the operation status of the cooling fan (54) is maintained during operation of the compressor (14) in the predetermined operation period (t_op) after suspension of the drying operation, or
wherein the operation status of the cooling fan (54) is maintained if the drying operation is resumed within the predetermined operation period (t_op).

10. Method according to any of the preceding claims, wherein the at least one heat-pump system component is one or more of:
the compressor (14),
an auxiliary heat exchanger or condenser adapted to cool the refrigerant at a location external to a process air channel (20).

11. Laundry treatment apparatus (2) comprising:
a heat pump system (4) having a compressor (14) for circulating a heat pump refrigerant,
a cooling fan (54) for cooling at least one component (14) of the heat pump system (4), and
a control unit (51), wherein the control unit (51) is adapted to control the operation of the cooling fan such that
if the cooling fan (54) is active at the time of suspending the compressor operation, maintaining the cooling fan (54) operating at the same conveyance rate (r_convey) or increasing the conveyance rate (r_convey) of the cooling fan (54), and
if the cooling fan (54) is not active at the time of suspending the compressor operation, activating the cooling fan (54) for conveying cooling air (C) to the at least one heat-pump system component (14), and
wherein the control unit (51) is further adapted to control the operation of the compressor (14) and the cooling fan (54) such that the compressor operation is resumed when the compressor suspension is cancelled and the cooling fan operation is maintained or maintained at the increased conveyance rate (r-convey) for a predetermined delay operation period (t_delay) after resuming compressor operation.

## Patentansprüche

1. Verfahren zum Betrieb eines Kühlgebläses (54) zum Kühlen mindestens einer Wärmepumpensystemkomponente (14) eines Wärmepumpensystems (4) in einer Wäschebehandlungsvorrichtung (2) mit Wärmepumpe, insbesondere einem Trockner mit Wärmepumpensystem oder einem Waschtrockner mit Wärmepumpensystem, wobei ein Kompressor (14) dazu eingerichtet ist, während eines Wäschetrocknungsvorgangs ein Kühlmittel durch das Wärmepumpensystem (4) zu zirkulieren, und wobei ein Kühlgebläse (54) dazu eingerichtet ist, Kühlluft (C) über die mindestens eine Wärmepumpensystemkomponente (14) zu fördern,
wobei das Verfahren im Fall, dass der Kompressorbetrieb ausgesetzt wird, Folgendes umfasst:
wenn das Kühlgebläse (54) zum Zeitpunkt des Aussetzens des Kompressorbetriebs aktiv ist, Beibehalten des Betriebs des Kühlgebläses (54) mit derselben Fördergeschwindigkeit (r_convey) oder Erhöhen der Fördergeschwindigkeit (r_convey) des Kühlgebläses (54), und
wenn das Kühlgebläse (54) zum Zeitpunkt des Aussetzens des Kompressorbetriebs nicht aktiv ist, Aktivieren des Kühlgebläses (54) zum Fördern von Kühlluft (C) zur mindestens einen Wärmepumpensystemkomponente (14);
und wobei das Verfahren ferner Folgendes umfasst:
Fortsetzen des Kompressorbetriebs, wenn das Aussetzen des Kompressors (14) aufgebhoben wird und Beibehalten des Betriebs des Kühlgebläses oder Beibehalten des Betriebs des Kühlgebläses mit der erhöhten Fördergeschwindigkeit (r_convey) für einen festgelegten Betriebsverzögerungszeitraum (t_delay) nach dem Fortsetzen des Kompressorbetriebs.

2. Verfahren nach Anspruch 1, ferner Folgendes umfassend: nach dem festgelegten Betriebsverzögerungszeitraum (t_delay) Fortsetzen eines Standardbetriebs des Kühlgebläses wie während des normalen Trockenvorgangs, wobei der Standardbetrieb des Gebläses vorsieht, dass das Gebläse ausgeschaltet ist oder eingeschaltet ist und in Abhängigkeit der Betriebsbedingungen mit einer festgelegten Fördergeschwindigkeit bläst.

3. Verfahren nach einem der vorstehenden Ansprüche,
wobei die Wäschebehandlungsvorrichtung (2) ein Trockner oder Waschtrockner ist, der einen Wäschelagerungsraum (18) und eine Tür (24), die eine Öffnung (21) zum Beladen/Entladen des Wäschelagerungsraums (18) abdeckt, umfasst, wobei die Tür (24), während eines Trockenvorgangs geschlossen ist, und
wobei das Verfahren ferner Folgendes umfasst: als Reaktion auf das Öffnen der Tür (24) Aussetzen des Trockenvorgangs und Kompressorbetriebs, während der Betrieb des Kühlgebläses (54) bei derselben Fördergeschwindigkeit (r_convey) beibehalten wird oder die Fördergeschwindigkeit (r_convey) des Kühlgebläses (54) erhöht wird.

4. Verfahren nach Anspruch 3, wobei der Wäschelagerungsraum eine drehbare Trommel (18) ist, die von einem Trommelmotor angetrieben wird, und wobei das Kühlgebläse (54) von einem Gebläsemotor (56) angetrieben wird, der unabhängig vom Trommelmotorbetrieb gesteuert werden kann.

5. Verfahren nach einem der vorstehenden Ansprüche, ferner Folgendes umfassend: Beibehalten des Betriebs des Kühlgebläses oder des Betriebs des Kühlgebläses mit erhöhter Fördergeschwindigkeit für einen festgelegten Zeitraum (t_pred) nach dem Aussetzen des Kompressorbetriebs.

6. Verfahren nach einem der vorstehenden Ansprüche, ferner Folgendes umfassend: nach dem Aussetzen des Kompressorbetriebs
Beibehalten des Betriebs des Kühlgebläses, solange die Temperatur (T_refrig) des Wärmepumpensystems (4) über einem Temperaturschwellenwert (T_thresh) liegt, oder
Beibehalten des Betriebs des Kühlgebläses für einen festgelegten Zeitraum (t_pred), nachdem eine Temperatur (T_refrig) des Wärmepumpensystems (4) einen Temperaturschwellenwert (T_thresh) erreicht hat oder darunter liegt.

7. Verfahren nach Anspruch 6, wobei der Temperaturschwellenwert (T_thresh)
ein erster Temperaturschwellenwert (T_thresh-1) ist, der während des Betriebs des Wärmepumpensystems (4) zum Betrieb des Kühlgebläses (54) verwendet wird, oder
ein zweiter Temperaturschwellenwert (T_thresh-2) ist, der unter dem ersten Temperaturschwellenwert (T_thresh-1) liegt.

8. Verfahren nach einem der vorstehenden Ansprüche, ferner Folgendes umfassend: wenn der Trockenvorgang ausgesetzt wird, Beibehalten des Betriebs des Kompressors (14) für einen festgelegten Betriebszeitraum (t_op).

9. Verfahren nach Anspruch 8,
wobei der Betriebsstatus des Kühlgebläses (54) während des Betriebs des Kompressors (14) im festgelegten Betriebszeitraum (t_op) nach dem Aussetzen des Trockenvorgangs beibehalten wird, oder
wobei der Betriebsstatus des Kühlgebläses (54) beibehalten wird, wenn der Trockenvorgang innerhalb des festgelegten Betriebszeitraums (t_op) fortgesetzt wird.

10. Verfahren nach einem der vorstehenden Ansprüche, wobei die mindestens eine Wärmepumpensystemkomponente eines oder mehrere der folgenden Elemente ist:
der Kompressor (14),
ein Hilfswärmetauscher oder -kondensator, der dazu eingerichtet ist, das Kühlmittel an einem Ort außerhalb eines Prozessluftkanals (20) zu kühlen.

11. Wäschebehandlungsvorrichtung (2), Folgendes umfassend:
ein Wärmepumpensystem (4), das einen Kompressor (14) zum Zirkulieren eines Wärmepumpenkühlmittels aufweist,
ein Kühlgebläse (54) zum Kühlen mindestens einer Komponente (14) des Wärmepumpensystems (4) und
eine Steuereinheit (51),
wobei die Steuereinheit (51) dazu eingerichtet ist, den Betrieb des Kühlgebläses zu steuern, sodass,
wenn das Kühlgebläse (54) zum Zeitpunkt des Aussetzens des Kompressorbetriebs aktiv ist, der Betrieb des Kühlgebläses (54) mit derselben Fördergeschwindigkeit (r_convey) beibehalten wird oder die Fördergeschwindigkeit (r_convey) des Kühlgebläses (54) erhöht wird, und
wenn das Kühlgebläse (54) zum Zeitpunkt des Aussetzens des Betriebs des Kompressors nicht aktiv ist, Aktivieren des Kühlgebläses (54) zum Fördern von Kühlluft (C) zu der mindestens einen Wärmepumpensystemkomponente (14), und
wobei die Steuerung (51) ferner dazu eingerichtet ist, den Betrieb des Kompressors (14) und des Kühlgebläses (54) zu steuern, sodass der Kompressorbetrieb fortgesetzt wird, wenn das Aussetzen des Kompressors aufgehoben wird, und der Betrieb des Kühlgebläses beibehalten wird oder für einen festgelegten Betriebsverzögerungszeitraum (t_delay) nach dem Fortsetzen des Kompressorbetriebs bei der erhöhten Fördergeschwindigkeit (r_convey) beibehalten wird.

## Revendications

1. Procédé de fonctionnement d'un ventilateur (54) de refroidissement pour refroidir au moins un composant (14) de système de pompe à chaleur d'un système (4) de pompe à chaleur dans un appareil (2) de traitement de linge avec pompe à chaleur, en particulier un sèche-linge avec système de pompe à chaleur ou un lave-linge séchant avec système de pompe à chaleur, un compresseur (14) étant prévu pour faire circuler un agent frigorigène à travers le système (4) de pompe à chaleur pendant un fonctionnement de séchage de linge et un ventilateur (54) de refroidissement étant prévu pour acheminer de l'air de refroidissement (C) par-dessus le ou les composants (14) de système de pompe à chaleur,
le procédé comportant, dans le cas où le fonctionnement du compresseur est suspendu, les étapes consistant :
si le ventilateur (54) de refroidissement est actif au moment de la suspension du fonctionnement du compresseur, à maintenir le ventilateur (54) de refroidissement en fonctionnement au même débit d'acheminement (r_convey) ou à augmenter le débit d'acheminement (r_convey) du ventilateur (54) de refroidissement, et
si le ventilateur (54) de refroidissement n'est pas actif au moment de la suspension du fonctionnement du compresseur, à activer le ventilateur (54) de refroidissement pour acheminer de l'air de refroidissement (C) vers le ou les composants (14) de système de pompe à chaleur ; et
le procédé comportant en outre les étapes consistant à : reprendre le fonctionnement du compresseur lorsque la suspension du compresseur (14) est annulée et maintenir le fonctionnement du ventilateur de refroidissement ou maintenir le fonctionnement du ventilateur de refroidissement au débit d'acheminement (r_convey) accru pendant une période prédéterminée de fonctionnement temporisé (t_delay) après avoir repris le fonctionnement du compresseur.

2. Procédé selon la revendication 1, comportant en outre l'étape consistant : après la période prédéterminée de fonctionnement temporisé (t_delay), à reprendre un fonctionnement standard du ventilateur de refroidissement tel qu'il est utilisé pendant un fonctionnement de séchage normal, le fonctionnement standard du ventilateur prévoyant que le ventilateur soit éteint ou soit allumé et souffle avec un débit d'acheminement prédéterminé en fonction des conditions de fonctionnement.

3. Procédé selon l'une quelconque des revendications précédentes,
l'appareil (2) de traitement de linge étant un sèche-linge ou lave-linge séchant comportant un compartiment (18) de stockage de linge et une porte (24) recouvrant une ouverture (21) servant à charger/décharger le compartiment (18) de stockage de linge, la porte (24) étant fermée pendant un fonctionnement de séchage, et
le procédé comportant en outre les étapes consistant :
en réaction à l'ouverture de la porte (24), à suspendre le fonctionnement de séchage et le fonctionnement du compresseur tout en maintenant le ventilateur (54) de refroidissement en fonctionnement au même débit d'acheminement (r_convey) ou en augmentant le débit d'acheminement (r_convey) du ventilateur (54) de refroidissement.

4. Procédé selon la revendication 3, le compartiment de stockage de linge étant un tambour rotatif (18) entraîné par un moteur de tambour et le ventilateur (54) de refroidissement étant entraîné par un moteur (56) de ventilateur qui peut être commandé indépendamment du fonctionnement du moteur de tambour.

5. Procédé selon l'une quelconque des revendications précédentes, comportant en outre l'étape consistant à : maintenir le fonctionnement du ventilateur de refroidissement ou le fonctionnement du ventilateur de refroidissement au débit d'acheminement accru pendant une période prédéterminée (t_pred) après avoir suspendu le fonctionnement du compresseur.

6. Procédé selon l'une quelconque des revendications précédentes, comportant en outre les étapes consistant : après avoir suspendu le fonctionnement du compresseur,
à maintenir le fonctionnement du ventilateur de refroidissement tant qu'une température (T_refrig) du système (4) de pompe à chaleur est supérieure à une valeur seuil de température (T_thresh), ou
à maintenir le fonctionnement du ventilateur de refroidissement pendant une période de fonctionnement prédéterminée (t_pred) après l'événement lors duquel une température (T_refrig) du système (4) de pompe à chaleur est inférieure ou égale à une valeur seuil de température (T_thresh).

7. Procédé selon la revendication 6, la valeur seuil de température (T_thresh) étant
une première valeur seuil de température (T_thresh-1) qui est utilisée pendant le fonctionnement du système (4) de pompe à chaleur pour faire fonctionner le ventilateur (54) de refroidissement, ou
une deuxième valeur seuil de température (T_thresh-2) qui est inférieure à la première valeur seuil de température (T_thresh-1).

8. Procédé selon l'une quelconque des revendications précédentes, comportant en outre l'étape consistant : lorsque le fonctionnement de séchage est suspendu, à maintenir le fonctionnement du compresseur (14) pendant une période de fonctionnement prédéterminée (t_op).

9. Procédé selon la revendication 8,
l'état de fonctionnement du ventilateur (54) de refroidissement étant maintenu pendant le fonctionnement du compresseur (14) dans la période de fonctionnement prédéterminée (t_op) après la suspension du fonctionnement de séchage, ou
l'état de fonctionnement du ventilateur (54) de refroidissement étant maintenu si le fonctionnement de séchage est repris au cours de la période de fonctionnement prédéterminée (t_op).

10. Procédé selon l'une quelconque des revendications précédentes, le ou les composants de système de pompe à chaleur étant un ou plusieurs composants parmi :
le compresseur (14),
un échangeur de chaleur auxiliaire ou un condenseur prévu pour refroidir l'agent frigorigène dans un lieu extérieur à un conduit (20) d'air de processus.

11. Appareil (2) de traitement de linge comportant :
un système (4) de pompe à chaleur doté d'un compresseur (14) servant à faire circuler un agent frigorigène de pompe à chaleur,
un ventilateur (54) de refroidissement servant à refroidir au moins un component (14) du système (4) de pompe à chaleur, et
une unité (51) de commande, l'unité (51) de commande étant prévue pour commander le fonctionnement du ventilateur de refroidissement de façon :
si le ventilateur (54) de refroidissement est actif au moment de la suspension du fonctionnement du compresseur, à maintenir le ventilateur (54) de refroidissement en fonctionnement au même débit d'acheminement (r_convey) ou à augmenter le débit d'acheminement (r_convey) du ventilateur (54) de refroidissement, et
si le ventilateur (54) de refroidissement n'est pas actif au moment de la suspension du fonctionnement du compresseur, à activer le ventilateur (54) de refroidissement pour acheminer de l'air de refroidissement (C) vers le ou les composants (14) de système de pompe à chaleur, et l'unité (51) de commande étant en outre prévue pour commander le fonctionnement du compresseur (14) et du ventilateur (54) de refroidissement de telle façon que le fonctionnement du compresseur soit repris lorsque le compresseur suspension est annulée et que le fonctionnement du ventilateur de refroidissement soit maintenu ou maintenu au débit d'acheminement (r_convey) accru pendant une période prédéterminée de fonctionnement temporisé (t_delay) après avoir repris le fonctionnement du compresseur.
